# EUROPEAN PATENT SPECIFICATION

(11) **EP 0 555 169 B1**
(45) Date of publication and mention of the grant of the patent: **30.10.1996**
(21) Application number: 93500012.5
(22) Date of filing: 05.02.1993
(51) Int. Cl.: G01B 21/20, B61K 9/12

(54) **Station for controlling railway wheelsets**
Messstation zum Kontrollieren von Eisenbahnfahrzeugrädern
Station de mesure pour contrôler des trains de roues de véhicules sur rails

(30) Priority: 07.02.1992 ES 9200254
(43) Date of publication of application: 11.08.1993
(73) Proprietor: INVESTIGACION Y ASESORAMIENTO TECNICO, S.A.(INVASTESA), E-28014 Madrid (ES)
(72) Inventor: Lopez Gomez, José Luis, ES-28023 Madrid (ES); Lipianez Garcia, Antonio, ES-28924 Madrid (ES); Sanchez Revuelta, Angel Luis, ES-28932 Madrid (ES)
(74) Representative: Elzaburu Marquez, Alberto

(56) References cited:
- DE-U- 8 713 927
- US-A- 3 474 542
- ZEITSCHR. F. EISENBAHNWESEN U. VERKEHRSTECHNIK - DIE EISENBAHNTECHNIK GLASERS ANNALEN vol. 114, no. 9/10, September 1990, BERLIN, DE. pages 347 - 348 WOLFGANG SCHMIDT 'Wheelset Diagnosis at Hamburg ICE Depot'
- PATENT ABSTRACTS OF JAPAN vol. 11, no. 358 (P-639)21 November 1987 & JP-A-62 135 712

## Description

### BACKGROUND OF THE INVENTION

The present invention refers to a station for controlling railway wheelsets as per the preamble of claim 1, the aim of which is to measure parameters of railway wheel profiles, that is to say , diameter, thickness, height, flange angle and distance between active wheelset faces, in order to obtain a control and dispose of a real time information on the condition of wheelset materials incorporated in vehicles under service.

Apart from this, this station for controlling railway wheelsets is capable, through an appropiate connection with a computering service, of carrying out statistical study of all measured parameters with the corresponding evaluation of materials exploitation.

### FIELD OF THE INVENTION

This invention applies to the raiway industry in general.

### RELATED ART

It is known to use a cadenced manual technique to check the condition of some points on the motive parts, this being an operation effected since a relatively few years.

Obviously, a manual operation assisted by an impact tool exercised on the wheels and a visual inspection of the railway vehicle wheelset surfaces did not fully exclude the existence of multiple anomalies.

Of course, there were scme potential anomalies detected by the use and utilization of this technique.

Later on, periodical inspection of same were carried out on railway vehicles in order to determine possible failures existing on the vehicle itself, or in order to detect a possible damage even before it being caused.

These operations incorporated a high labor cost, breakdowns of the inspected material and, of course, added operations for moving the material to workshops and again moving it to be incorporated into an active service.

Fundamentally, the railway vehicles should be inspected at the area corresponding to their wheelset elements, and this operation should be effected in a rigorously periodical way, with a previously stressed character, and once the inspection operation carried out, the firm owning the railway vehicle could relay on an exhaustive detail of the condition of its vehicle, and also to dispose of a checking or control sheet showing the operations already made or to be made on it in order to have an absolute certainty on the vehicle itself.

According to the above, the modern trains should be subjected to increased rigorous controls in view of the increasing traffic speeds, and, of course, due to the greater requirements existing at present as regards their safety and comfort.

On the other side, it is also imperative to attain these suitable improvements with a lesser exploitation cost.

An evident solution to this problem would be to relay on a fully automatic installation, fitted with a great reliability and, at the same time, counting on the possibility of getting a substantial reduction of financial costs, guaranteeing at the same time a reliable control process of wheelsets.

An automatic installation for collecting status data in a running wheelset is known from DE-U-87 13 927, where two parallel rails, each one associated to one of the wheels to be measured, are provided, each rail being fitted with at least a feeling rail extending parallel therewith, which can move vertically almost parallel to itself overcoming a spring force for carrying out a measurement of wheel parameters and which is connected with means for detecting the motion magnitude.

Nevertheless, the known installation fails to solve all the previously discussed problems, and thus there is still a continued need of a station which, being simple in construction, is able to achieve a suitable control of railway wheelsets as has been pointed out above.

### SUMMARY OF THE INVENTION

The station for controlling railway wheelsets proposed by the invention constitutes, per se, a solution obviously simplifying and, simultaneously, potentiating the control of railway wheelsets, and offering also multiple auxiliary applications. It has the features set forth in the characterizing clause of claim 1.

In a more definite way, the station for controlling railway wheelsets proposed here, constitutes an equipment configurated as an electronic-mechanical-computerized system, having different components.

It can be said that the station for controlling railway wheelsets, according the the preceding paragraph, has three definite areas, that is:
- A mechanical part
- An electronic part

- A computerized part.

A harmonic cooperation of these three units results in the existence of the station for controlling railway wheelsets.

The mechanical part is mounted on the track itself, and it is composed of a plate that, acting as a guide, supports the mechanisms driving potentiometric displacement sensors, by a fixed number of 4 or more per track line, corresponding to the wheel diameter, flangs thickness, flange height, angle and distance between active faces.

Said mechanisms are made of high quality, precision machined alloyed steel, and they are superficially protected against aggressive agents normally found on the tracks, such as:
- Oils
- Water
- Grease
- and so on.

Their dimensioning corresponds to 22 tons per shaft.

The electronic part is intended for carrying out measurements, and it is composed of eight potentiometric sensors and,of course, it includes the processing electronics of the signals from the sensors.

For processing these signals, there is provided an electronic unit composed of:
Feeding bridges, of -15V and +5V;
Eight units processing and digitizing the signals;they send these signals to a CPU, and each of them disposes of a microprocessor handling each signal according to a specific program.

A CPU to communicate the electronic measurement unit to a PC.

The computerized part is integrated, in its hardware, by a-compatible PC and a printer.

Its software, specifically developed for this application, is basically composed of the following parts:
- A communication program of the electronic measurement unit with a PC,watching the link between the CPU of the electronic unit and the PC.
- A program analysing the obtained wheelset parameters, adapting itself to the requirements of the user. This analysis can be modified according to the theorical or experimental data as for the wear of the wheelsets and reprofiles brought by the user.
- Files for taking decisions according the analysis made, being organically configured in relation to the user's requirements,-and they can be continuously loaded.

These files contain the denomination listing of the vehicle, its wheelset profile and its tolerances related between wheels on a same shaft, between bogie wheels, vehicle wheels and even branch wheels.

According to these files, the system will take decisions to recommend predetermined operations, which can be validated by the user or modified in accordance with particular circumstances so being cancelled the automatic decision.

The files arranged in the computerized part are designed as a vehicle file, a stencil file and a calibration file, all them being specifically designed for handling a base process.
- A program applicated to maintenance , that is to say, a program fundamentally foreseen for providing control and information to the Depot Heads or those responsible for the maintenance, and it can be modified according to the requirements of each department.

From the information on the wheelset condition can be obtained alarms for the wheels, the profile of which is within the limits and is necessary to turn on a lathe, turning programming, removal of material which cannot be turned, etc.
- A specific application for CNC lathe, intended for realizing, once approved, the turning decision on the PC display, proceeding to transmit to the numerical controls the corresponding turning program, and obtaining, through a printer, the configuration listing.

Further details and features of the invention are described in the dependent claims 2 to 7.

The station for controlling railway wheelsets has a scope based on the following points:
A) The passing speed of the vehicle will be lesser than 5 km/ hour, but if no measurement is required, it can run up to 15 km/h.
B) The wheel parameter sensoring tolerances are as follows:
   - wheel diameter +/- 1 mm
   - flange height +/- .1 mm
   - flange thickness +/- .1 mm
   - Qr. +/- .2 mm
C) Repetition of measurements:
   - wheel diameter +/- .5 mm
   - flange height +/- .05 mm
   - flange thickness +/- .05 mm
   - Qr. +/- .1 mm

The system is compatible with the present railway substructure, and it can be installed on any track where the traffic is made at a shunting speed.

Also, the system is compatible with the present electric railway substructure at any line or depot.

Lastly, the system is open, which means that it can accept any additional signal preprocessing or obtained result postprocessing, such as:
- vehicle identification systems
- generation of local networks linked to a computer managing several PCs.
- Information transmit via telephone.

### DESCRIPTION OF THE DRAWINGS

In order to supplement the present description and to help to a better understanding the features of the invention, the accompanying drawins, which are a part of the specification, will show, in an illustrative and non limitative way, the following:

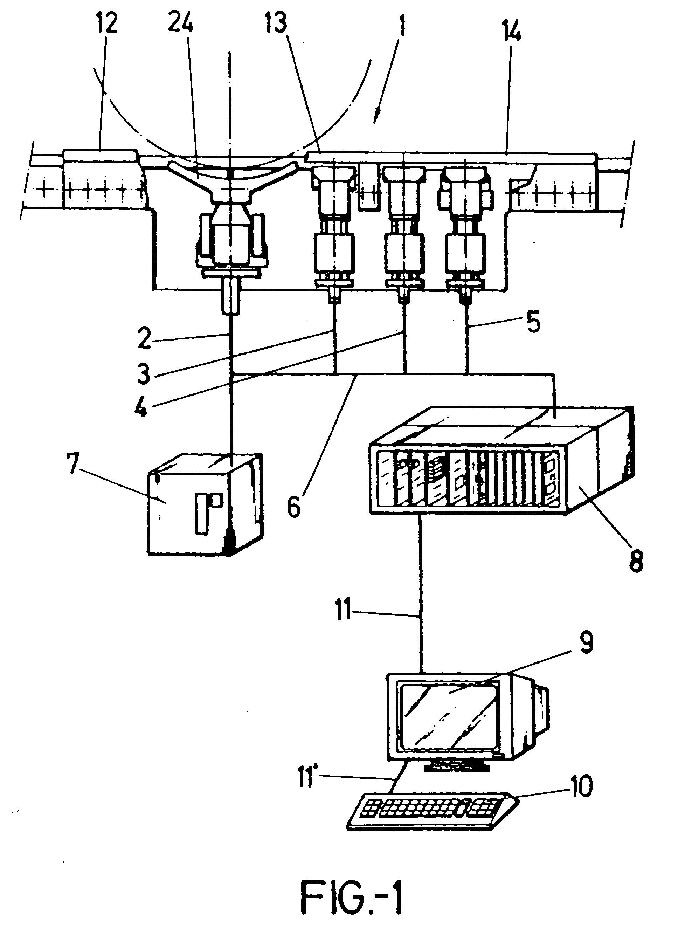

Figure 1 shows a view of the different elements composing the station for controlling railway wheelsets which thanks to its fully harmonic operation, attain the proposed aim of this invention.

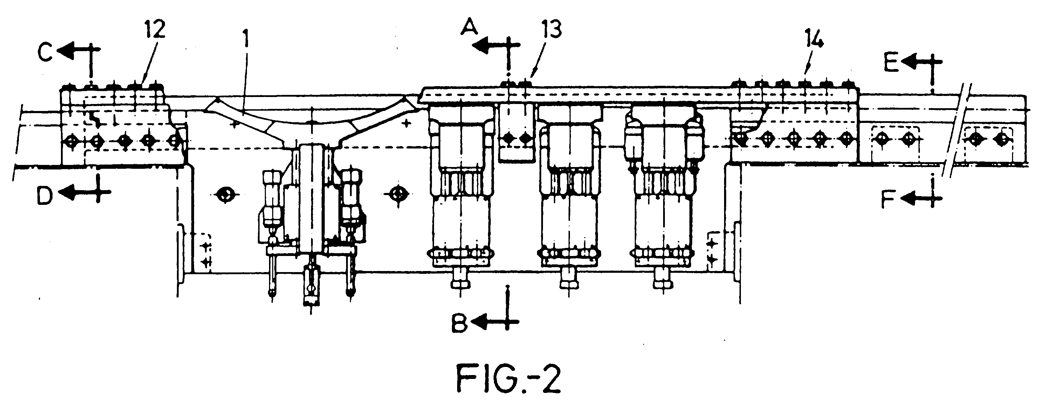

Figure 2 shows an elevational side view of the mechanical - part or installation.

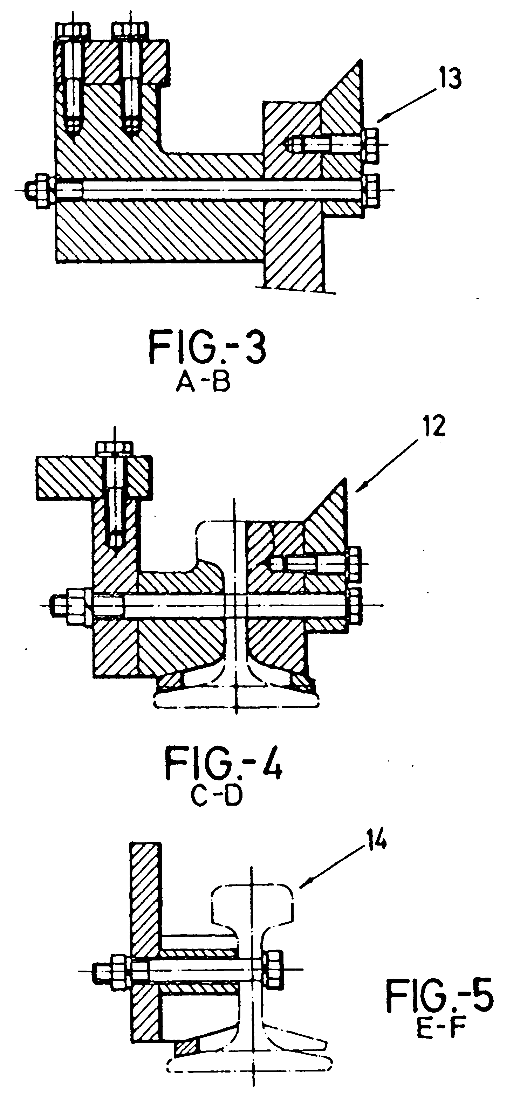

Figure 3 shows a front elevational detail duly sectioned, viewed by A-B shown jointly with other elements in Fig. 2.

Figure 4 shows a front elevational detail duly sectioned viewed by C-D of the assembly shown in Fig. 2.

Figure 5 shows a front elevational detail, due sectioned viewed by E-F of the assembly shown in Fig. 2.

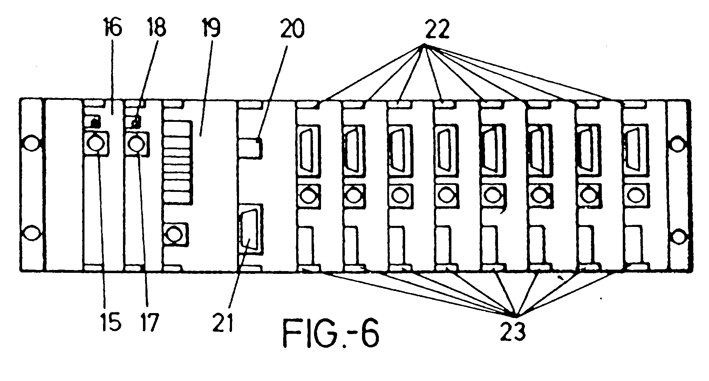

Figure 6 shows finally the measurement equipment.

### DETAILED DESCRIPTION OF THE PREFERRED EMBODIMENTS

From these figures, it can be seen that the station for controlling railway wheelsets proposed by the invention, is constituted by a mechanical part 1, from which some connections 2, 3, 4 and 5 emerge, which connect a common communication 6, so obtaining, on a side, to communicate with a pneumatic installation 7 and with a measurement equipment 8, which, in turn, is connected to a computer 9 by means of a connection 11, having the relative keyboard 10 the computer 9, the computer and the keyboard being connected each other by means of a connection 11'.

Also, the station for controlling railway wheelsets has a series of elements 12, 13 and 14, which configure the mechanical subsystem from which is effected the measurement of the flange thickness, flange height and flange angle, counting on element referenced 24 configuring the wheelset band diameter measurement device.

The station incorporates a measurement equipment having an indicator LED 15, counting on a voltage adjuster 16, as well as a second indicator led 17, also incorporated in a voltage adjuster 18.

Under the reference 19, it is shown the voltage indicator LED +5V; under the reference 20, the general zero setting pushing; under reference 21, the communication link with a PC, while the references 22 correspond to connections to sensor, and the reference 23 corresponds to connections to the measurement indicator LEDs.

In syntesis, it can be said that, for performing the railway wheel profile, there are several geometric standards which are used in a conventional manner by several railway managements.

Nevertheless, in all them, it is necessary to keep a series of geometric parameters within values which are considered fully necessary for obtaining a traffic safety.

When these parameters are within their tolerance limit, it is necessary to specifically recover the profile.

The measurement, that is to say, the control, is periodically performed in order to check these parameters.

Parameters normally controlled are:
- flange thickness
- flange height
- flange angle
- wheelset band diameter

To obtain the control of these parameters, it has been provided a installation, such as above described, capable of measuring, the vehicle running at a maximum speed of 5 km/h, all and every above-mentioned parameters for all wheels integrating the vehicle or the railway composite.

Flange thickness is the flange size measured 10 mm under the wheelset.

Flange height is the geometric measure from the lower edge of the flange to the wheelset band, measured on a wheel diameter.

Flange angle is the inclination of the active face of flange it self, measured as the distance between the measuring point of the flange thickness on the active face and a point on the active face 2 mm from the lower edge of the flange.

Finally, diameter of the wheelset band is the wheel diameter measured on a parallel plane to the inner face of the wheel and 70 mm from this later.

It is easily deducted that the installation is composed of three subdivisions and an application software.

The subsystems are as follows:
A) Mechanical
B) Pneumatic
C) Electronic

The mechanical subsystem is divided, in turn, into two groups:
1. Wheelset support and guide
2. Measurement gages

Both the supporting and guiding of the wheelset is made through a steel plate providing a continuity to the track head.

This support acts as wheelset track, and, in turn, presents two guides, one outer and one inner for centering the shaft, the wheels of which are to be measured.

The inner guide is a countertrack which is displaced from the shaft transversely to track, within the wheelset tolerances and acting on the inner face of wheel.

The outer guide is a 45º ramp, which, acting on the outer face of wheel -wheelset bevel- avoids an excess displacement of shaft, due to the inner centering.

These two centerers are stiffly fastened to the wheelset support by means of bolts.

The measurement gages are stiffly anchored to the wheelset support by means of bolts.

These measurement gages, when in rest position, do not act on the wheel, so allowing the traffic of vehicles at a shunting - speed that, as above-mentioned, will never exceed 5 km/hour.

Once pneumatically activated, the gages are placed in a condition for measuring.

The gages used are those intended for measuring the thickness, height, flange angle and diameter of the wheelset band.

The thickness gage is composed of a series of mechanical tempered steel feelers contacting the wheelset bands and the inner and outer faces of the flange, and being placed, through horizontal and vertical motions in a plane which is perpendicular to the track axle in the position appropiate for measuring the thickness.

The feelers machanically act on a potentiometer, which duly - treated signal will give the thickness measure.

The height gage is composed of a series of mechanical feelers as well, made of tempered steel contacting the outer face of the wheel, the wheelset band and the lower part of the flange, and being placed through horizontal and vertical motions in a plane which is perpendicular to the track axle in an appropiate position to measure the flange height.

The mechanical feelers act on a potentiometer which duly treated signal will give the hight of the flange measured.

The flange angle gage is also composed of a series of mechanical feelers, made of tempered steel as well, acting in contact with the outer face of the wheel, the inner face and the lower part of the flange, being located, through horizontal and vertical motions, at a plane which is perpendicular to the track axle in the appropiate position to measure the flange angle.

The linear feelers act on a potentiometer which duly treated signal will give the flange angle measurement.

Lastly, the wheelset band diameter gage is composed of a steel fork with hard metal contacts which, in contact with the lower part of the flange, define a chord on a circle contained in a plane which is parallel to the wheelset band and passing over the lower part of the flange.

A feeler centered with the contacts measures the axle corresponding to that chord.

The system is basically in the wheel running sense to keep in touch three measurement points with the wheel as long as possible.

The axle measurement entails in a potentiometer displacement which signal, duly treated, will give the wheelset band diameter.

According to the above-mentioned statement, it is clear that both the thickness gage and height gage form a direct measurement, while the flange angle gage and the wheelset diameter gage form indirect measurements.

The pneumatic subsystem configures as follows:

All the deactivated gages do not carry out any measure on the wheels and allow the vehicles to run over the installation at a shunting speed.

The gage activation consists in elevating these so that, on passing the wheel, they contact the feelers.

This is obtained thanks to pneumatic cylinders with a 6 kg/cm² pressurized air, sliding vertically the gages.

Each gage has two pneumatic cylinders.

The station has a flexible pneumatic piping with distributors carrying the compressed air from the pneumatic station to the cylinders.

The pneumatic station is composed of a main compressed air intake, a reducer lowering the compressed air pressure from the real position to 6 kg/cm², a pressure gauge, and an electrovalve allowing the air to pass to the cylinders, and commanded, at operator's will, from the control station of the system, or automatically upon passing a vehicle.

All these devices are housed in a watertight protecting metal closet.

Finally, the electronic subsystem is formed by the so-called measure unit.

The measure unit is composed of an electric control for the pneumatic system and a connection to the mains of the whole system.

The installation counts on the use of electronic cards, which dispose of the following units:
- Signal collecting and digitizing unit.
- Control and communication unit with a PC.
- Control and feeding unit for the electrovalves.
- Analogic measuring cards.
- Feeding sources.
- Process control unit.

The signal collecting and digitizing unit performs the corresponding sensor polarization and receives a signal from said sensor, the amplitude of this signal being proportional to the wheel parameter amplitude to be measured.

The sensor polarization is 10 volts, and it is dependent for each sensor.

In the margin of the amplitude of the signal provided by the sensor, it can, therefore, oscillate between 0 and 10 volts.

The digitized information of the signal is transferred to the control and communication unit.

Each collecting unit occupies a Eurocard type card connectable to a standard bus on its upper side.
On the front side of the card, the connection to the sensor plus a luminous informative device are found.

The feeding of each of the collecting units, as well as the information transfer with the control unit, is performed through the back bus.

The luminiscent diode or luminous indicator has the function of remaining normally on, blinking slightly when a new measure is produced.

The diode does not light up if the card is not in a condition of carrying out a measure or if there is a general fault in the circuit.

Finally, the signal collecting and digitizing unit has an appropiate adjustment for positioning the sensor in a rest condition, It is a sliding potentiometer fed with 10 volts, having 10V voltage between ends and a tolerance similar to 0.1 per cent, while the voltage between cursor and mass is 1.5 volts, and its tolerance is constituted with a maximum 10 per cent.

The control and communication unit with a PC performs the following functions:

It carries out a communication with the collecting units, performing the communication via parallel through the bus card.

In this case, the digitized value of the signal given by the sensor is direct transferred, this value can vary between 0 and 3 FFH.

Moreover, each collecting unit energizes a flag before a measure, which is read periodically by the CPU.

Communications with a central computer are performed from the information given by different collection units, being transmitted to a PC by means of the SDT protocol via series.

The units feeding and controlling the electrovalves consist of a +5V FA3 source, a +12V FA2 source, a -12V FA1 source, electrovalve feeding and back panel.

Also, the equipment has a main switch feeding the following devices:
- Measuring unit
- Personal computer
- Printer
- Electrovalves

Each analogic measurement cards incorporates 32 Kbyte data memory, and 8 Kbyte program memory, as well a inlet analogic signal treatment step into the microcontroller.

The microcontroller includes the function of analog-digital converter.

It is about, consequently, measuring in a dynamic way, a series of wheel parameters by means of fully mechanical devices and sensors, constituted as linear potentiometers, which are isolated on the track.

The impulse-shaped signal, which is proportional to the parameter to be measured, is introduced through the front connector on the card, and the first analogic step is produced.

After a filtering and amplification process, the signal arrives at a analog-digital converter, and through a measuring algorithm the maximum value of the signal is detected.

This capture is performed with a 10-bit resolution.

After, this information is transferred to the CPU.

The front LED diode shows the status of the card:
- ON indicates waiting condition
- BLINKING indicates measure moment.

Each number is assigned a wheel parameter, and the position of each of the cards in the frame is indifferent.

The station has three feeding sources, two of them of -12V, which have a rectification and filtering step, in addition to a linear voltage regulator.

The outlet voltage is -12V, although it is possible a fine fit by means of a potentiometer located at the front side of the card.

Both sources are fed at 18V AC and can provide an outlet current of 1.5 amperes at 12V.

This voltage stems from a transformer located at the back panel of the equipment.

Since the 18V voltage is floating, it is possible to obtain, through two identical feeding sources, outlet voltages on the order of +12V and -12V.

+12V, -12V voltages are necessary in the 100M measuring unit equipment for feeding the analog steps.

Said steps have, in general, a low consumption and they perform so sensitive tasks as to handle analog signals, sensor impulse amplification, analog-digital conversion, and so on.

The analog step feeding must perform a series o requirements for a correct and accurate operation of same:
- Feeding voltage with low curly level.
- Possibility of a separation of masses (digital, analog).
- Quick responses at temporary consumptions.

The third feeding source is a feeding source with 5VDC 4A outlet.

In fact, it is a regulating step of the 5V source, since the transformer, rectifier and filter condenser are housed in the back panel.

This source receives a 35V direct voltage and reduces them to 5V by means of a switched circuit.

The whole switching electronics is integrated in a module which allows to obtain 85 per cent performance and a low thermic dissipation.

The front LED diode shows the presence of 5V outlet voltage.

This equipment requires a 5V for feeding all the digital circuits, both in analog cards and center CPU.

These digital elements are: microprocessors, memory, inlet/ outlet buffer, etc., bearing in mind that, in the equipment, 9 microprocessors operate simultaneously with their respective data memory and program, and the common feeding source should have characteristics such as:
- Overdimensioned nominal outlet power.
- Low loss index, that is to say, a high performance.
- Possible separation of masses (analog/digital).

A high performance, both electric and thermic, is obtained by using the switched source system.

The mass separation is possible thanks to the use of an independent transformer for that source.

Lastly, the station disposes of a process control unit incorporating the microcontroller, a RAM memory, a program memory, inlet/outlet circuits, and, also, a serial communication channel.

Its task is to perform a control function of each of the analog measuring channels, collecting and centralizing the obtained measures and sending them later to a PC.

The data transfer between analog channels and CPU is performed via parallel through a bus located at the rear backplane .

The serial communication with the PC is performed according to standard RS232 through the connector located at the front side of the card.

The operating mode is, basically, as follows:

The central CPU checks sequencially the status of the analog channels, and if a card has performed some valid measurement, then, a validation signal is activated which is identified by the CPU.

Once the data referring to a measure have been obtained, the process of the analog channels is energizes again.

This process is ciclyc and ends upon arriving at the number of shafts programmed by the PC.

The CPU identifies each of the analog cards by a number from 0 to 7, preestablished.

It is not considered necessary to extend more this description for an expert in the art to understand the scope of the invention and the advantages derived from it.

The materials, shape, size and arrangement of the elements will be open to variation, provided that it does not imply any alteration to the essence of the invention as claimed.

The terms under which this specification has been described should be taken in an ample and non limitative sense.

## Claims

1. A station for controlling railway wheelsets intended for carrying out measurements of the parameters defining the wheelset profile of each wheel, as well as of the dimensiones relating both wheels on each shaft, comprising two parallel rails, each one associated to one of said wheels, and being constituted by a series of measuring chains, each of which is composed of measuring gages related to feelers communicated with a computer (9) provided with means for analizing the data coming therefrom, relating them each other and defining the turning profile at a maximum improvement for each wheel, all in an automatic way, the union of this station to several peripherals being possible, as well as its use for generating local networks, characterized in that the station comprises a mechanical subsystem (1) installed on the track itself and dimensioned for a 22-ton load per shaft, which is formed by a plate which, acting as a guide, supports the mechanisms driving potentiometric displacement sensors, four or more per track line, corresponding to wheel diameter, flange thichness, flange height, flange angle and distance between active wheel faces; an electronic subsystem (8) forming an electronic measuring unit and composed of eight or more potentiometric sensors and the processing electronics for the signals from the latter, said electronic subsystem (8) being communicated with the computer (9) and including an electronic processing unit composed of -15V and +5V power supplies and eight signal processing and digitizing units that send these signals to a CPU; and a pneumatic subsystem (7) including a pneumatic installation constituted by a main intake of compressed air, a reductor lowering the compressed air pressure from the real position to 6 kg/cm², a pressure gage and an electrovalve providing an air passage to pneumatic cylinders which vertically slide the measuring gages and commanded from the control unit of the system at the operator's will or automatically when a vehicle is passing, all these devices being housed in a metal watertight protecting closet.

2. A station for controlling railway wheelsets according to claim 1, characterized in that each of the electronic processing units has a microprocessor handling each signal in accordance with a specific program, and the CPU unit communicates the electronic measuring unit with the computer (9).

3. A station for controlling railway wheelsets according to any of the preceding claims, characterized in that said plate of the mechanical subsystem (1) consists of a steel plate which is a continuity of the trackhead and serves as a wheelset support and guide, said steel plate acting as a wheelset track and, at the same time, having two guides, one outer and one inner, for centering the shaft carrying the wheels to be measured, the inner guide being a countertrack which displaces the shaft transversely to the track within the wheelset tolerance, and which acts on the inner face of the wheel.

4. A station for controlling railway wheelsets according to claim 3, characterized in that said outer guide is a 45° ramp which, acting on the outer face of the wheel - wheelset bevel -, avoids an excess displacement of the shaft due to the inner centering, both centering guides being stiffly fastened to the wheelset support by means of bolts and the measuring gages being stiffly anchored to the wheelset support likewise by means of bolts, the gages in a rest position not acting on the wheel and allowing the traffic of vehicles at a shunting speed, while, once pneumatically activated, they are placed in a condition for measurement.

5. A station for controlling railway wheelsets according to any of the preceding claims, characterized in that the measuring gages consist of a series of mechanical feelers made of tempered steel contacting the areas for which they are previously determinated, and acting on potentiometers the signals of which, duly treated, will give the measure of the required parameters.

6. A station for controlling railway wheelsets according to claim 5, characterized in that the measuring gages are each provided with two pneumatic cylinders which activate them through the elevation of same on the wheels passing in order to contact with the feelers and which slide them vertically by means of steel guideways and linear ball bearings, there being a flexible pneumatic piping with distributors carrying compressed air from the pneumatic subsystem (7) to the cylinders.

7. A station for controlling railway wheelsets according to any of the preceding claims, characterized in that the electronic subsystem (8) further comprises a signal collecting and digitizing unit, a unit for control and communication with the computer (9), several electrovalve feeding and controlling units, analog measuring cards, three power supply units and a process control unit.

## Patentansprüche

1. Meßstation zum Kontrollieren von Eisenbahnradsätzen, die dazu bestimmt ist, Messungen der das Radsatzprofil definierenden Parameter jedes Rades sowie beide Räder auf jeder Achse betreffender Abmessungen auszuführen, mit zwei parallelen Schienen, von denen jede einem der Räder zugeordnet ist, und aus einer Reihe von Meßketten zusammengesetzt ist, wovon jede Fühlern zugeordnete Meßgeräte aufweist, die mit einem Computer (9) in Verbindung stehen, der mit einem Mittel versehen ist, um automatisch von dort kommende Daten zu analysieren, sie miteinander in Beziehung zu setzen und die Drehprofile bei einer maximalen Verbesserung für jedes Rad zu definieren, wobei die Verbindung dieser Meßstation mit mehreren Peripheriegeräten und auch ihre Verwendung zum Erzeugen lokaler Netzwerke möglich ist, dadurch gekennzeichnet, daß die Meßstation ein an dem Gleis selbst angebautes und für eine Last von 22 Tonnen pro Achse bemessenes mechanisches Untersystem (1) umfaßt, das durch eine Platte gebildet wird, die als eine Führung wirkend die Einrichtungen trägt, die potentiometrische Verschiebungssensoren steuern, vier oder mehr pro Gleisstrang, die dem Raddurchmesser, der Spurkranzdicke, der Spurkranzhöhe, dem Spurkranzwinkel und dem Abstand zwischen Radlaufflächen entsprechen; ein elektronisches Untersystem (8), das eine elektronische Meßeinheit bildet und sich aus acht oder mehr potentiometrischen Sensoren und der Verarbeitungselektronik für die Signale von den letzteren zusammensetzt, wobei das elektronische Untersystem (8) mit dem Computer (9) in Verbindung steht und eine elektronische Verarbeitungseinheit enthält, die aus Spannungsquellen mit -15 V und +5 V und acht signalverarbeitenden und -digitalisierenden Einheiten besteht, die diese Signale an eine CPU senden; und ein Druckluft-Untersystem (7), das eine durch einen Haupteinlaß für Druckluft bestehende Druckluftanlage, einen Reduktor, der den Druck der Druckluft von dem tatsächlichen Wert auf 6 kg/cm² verringert, ein Druckmeßgerät und ein Elektroventil enthält, das einen Luftdurchgang zu Druckluftzylindern schafft, die die Meßgeräte senkrecht verschieben, und von der Steuereinheit des Systems durch den Bediener oder automatisch befohlen wird, wenn ein Fahrzeug vorüberfährt, wobei all diese Vorrichtungen in einem wasserdichten Schutzgehäuse aus Metall untergebracht sind.

2. Meßstation zum Kontrollieren von Eisenbahnradsätzen nach Anspruch 1, dadurch gekennzeichnet, daß jede der elektronischen Verarbeitungseinheiten einen Mikroprozessor aufweist, der jedes Signal gemäß einem bestimmten Programm behandelt, und die CPU-Einheit die elektronische Meßeinheit mit dem Computer (9) verbindet.

3. Meßstation zum Kontrollieren von Eisenbahnradsätzen nach einem der vorhergehenden Ansprüche, dadurch gekennzeichnet, daß die Platte des mechanischen Untersystems (1) aus einer Stahlplatte besteht, die eine Fortsetzung des Gleiskopfes ist und als ein Radsatzträger und eine Führung dient, wobei die Stahlplatte als ein Radsatzgleis dient und gleichzeitig zwei Führungen, eine äußere und eine innere, aufweist, um die Achse zu zentrieren, die die zu messenden Räder trägt, wobei die innere Führung ein Gegengleis ist, das die Achse innerhalb der Radsatz toleranz quer zu dem Gleis verschiebt und das auf die Innenfläche des Rades wirkt.

4. Meßstation zum Kontrollieren von Eisenbahnradsätzen gemäß Anspruch 3, dadurch gekennzeichnet, daß die äußere Führung eine 45°-rampe ist, die auf die Außenfläche des Rades-den Radsatzkegel - wirkend eine zu große Verschiebung der Achse infolge des inneren Zentrierens vermeidet, wobei beide Zentrierführungen an dem Radsatzträger durch Bolzen starr befestigt sind und die Meßgeräte an dem Radsatzträger ebenfalls durch Bolzen starr verankert sind, wobei die Meßgeräte in einer Ruhestellung auf das Rad nicht wirken und den Verkehr von Fahrzeugen bei einer Rangiergeschwindigkeit erlauben, während sie, wenn sie einmal mit Druckluft angesteuert werden, in einen Zustand für eine Messung versetzt werden.

5. Meßstation zum Kontrollieren von Eisenbahnradsätzen nach einem der vorhergehenden Ansprüche, dadurch gekennzeichnet, daß die Meßgeräte aus einer Reihe von aus gehärtetem Stahl hergestellten mechanischen Fühlern bestehen, die die Flächen berühren, für die sie vorher bestimmt werden, und auf Potentiometer wirken, deren Signale, wenn sie richtig behandelt werden, das Maß der erforderlichen Parameter ergeben werden.

6. Meßstation zum Kontrollieren von Eisenbahnradsätzen nach Anspruch 5, dadurch gekennzeichnet, daß die Meßgeräte jeweils mit zwei Druckluftzylindern versehen sind, die sie durch die Anhebung derselben auf die Räder ansteuern, die vorüberfahren, um mit den Fühlern in Kontakt zu kommen, und die sie senkrecht mittels Stahlführungsbahnen und linearer Kugellager verschieben, wobei eine biegsame Druckluftleitung mit Verteilern vorgesehen ist, die Druckluft von dem Druckluft-Untersystem (7) zu den Zylindern transportiert.

7. Meßstation zum Kontrollieren von Eisenbahnradsätzen nach einem der vorhergehenden Ansprüche, dadurch gekennzeichnet, daß das elektronische Untersystem (8) ferner eine signalerfassende und -digitalisierende Einheit, eine Einheit für eine Steuerung und eine Übertragung mit dem Computer (9), mehrere ein Elektroventil beschickende und steuernde Einheiten, analoge Meßkarten, drei Spannungsquelleneinheiten und eine Prozeßsteuereinheit enthält.

## Revendications

1. Poste pour contrôler des essieux montés de véhicules ferroviaires pour mesurer les paramètres définissant le profil d'essieu de chaque roue ainsi que les dimensions concernant les deux roues sur chaque essieu, comprenant deux rails parallèles, dont chacun est associé à une desdites roues, et étant constitué par une série de chaînes de mesure, dont chacune est composée de jauges de mesure reliées à des palpeurs communiquant avec un ordinateur (9) muni de moyens destinés à analyser les données arrivant de ces palpeurs, à établir leur relation et à définir le profil de rotation en vue d'une amélioration maximale pour chaque roue, tout ceci d'une façon automatique, la liaison de ce poste avec plusieurs périphériques étant possible ainsi que son utilisation pour générer des réseaux locaux, caractérisé en ce que le poste comprend un sous-système mécanique (1) installé sur la voie elle-même et dimensionné en vue d'une charge de 22 tonnes par essieu, ce sous-système étant formé par une plaque qui, en agissant comme un guide, supporte les mécanismes entraînant les capteurs de déplacement potentiométriques, au nombre de quatre ou plus de quatre par voie, correspondant au diamètre des roues, à l'épaisseur des boudins, à la hauteur des boudins. à l'angle des boudins et à la distance entre les faces actives des roues; un sous-système électronique (8) formant une unité de mesure électronique et composé de huit ou plus de huit capteurs potentiométriques et des dispositifs électroniques de traitement pour les signaux provenant de ces capteurs, ledit sous-système électronique (8) communiquant avec l'ordinateur (9) et comprenant une unité de traitement électronique composée de sources d'alimentation de -15V et +5V et de huit unités de traitement et de numérisation de signaux qui envoient ces signaux à une unité de traitement centrale (CPU), et un sous-système pneumatique (7) comprenant une installation pneumatique constituée par une admission principale d'air comprimé, un réducteur abaissant la pression de l'air comprimé de sa valeur réelle jusqu'à 6 kg/cm², une jauge de mesure de pression et une électrovanne fournissant un passage d'air aux vérins pneumatiques qui font coulisser verticalement les jauges de mesure et sont commandés à partir de l'unité de commande du système sous la volonté d'un opérateur ou automatiquement quand un véhicule passe, tous ces dispositifs étant logés dans une enceinte de protection étanche à l'eau.

2. Poste pour contrôler des essieux montés de véhicules ferroviaires selon la revendication 1, caractérisé en ce que chacune des unités de traitement électroniques comporte un microprocesseur traitant chaque signal en fonction d'un programme spécifique et l'unité CPU fait communiquer l'unité de mesure électrique avec l'ordinateur (9).

3. Poste pour contrôler les essieux montés de véhicules ferroviaires selon l'une quelconque des revendications précédentes, caractérisé en ce que ladite plaque du sous-système mécanique (1) consiste en une plaque d'acier qui est un prolongement de la tête de la voie et sert de support et de guide aux essieux montés, ladite plaque d'acier agissant comme une voie pour essieux montés et comportant en même temps deux guides, un guide extérieur et un guide intérieur, pour centrer l'essieu supportant les roues à mesurer, le guide intérieur étant une contre-voie qui déplace l'essieu transversalement à la voie dans les limites des tolérance de l'essieu monté, et qui agit sur la face intérieure de la roue.

4. Poste pour contrôler des essieux montés de véhicules ferroviaires selon la revendication 3, caractérisé en ce que ledit guide extérieur est une rampe de 45° qui, en agissant sur la face extérieure de l'ensemble roue-chanfrein d'essieu monté, évite un déplacement exagéré de l'essieu dû au centrage intérieur, les deux guides de centrage étant fixés rigidement au support d'essieux montés au moyen de boulons et les jauges de mesure étant ancrées rigidement au support de l'essieu monté, de même, au moyen de boulons, des jauges dans une position de repos n'agissant pas sur la roue et permettant le trafic des véhicules à une vitesse de manoeuvre, tandis qu'une fois activées pneumatiquement elles sont placées dans un état permettant d'effectuer une mesure.

5. Poste pour contrôler des essieux montés de véhicules ferroviaires selon l'une quelconque des revendications précédentes, caractérisé en ce que les jauges de mesure consistent en une série de palpeurs mécaniques en acier trempé, en contact avec les zones pour lesquelles ils ont été préalablement déterminés, et agissant sur des potentiomètres dont les signaux, dûment traités, donnent la mesure des paramètres requis.

6. Poste pour contrôler des essieux montés de véhicules ferroviaires selon la revendication 5, caractérisé en ce que les jauges de mesure sont pourvues chacune de deux vérins pneumatiques qui les rendent actives en les soulevant sur les roues en cours de passage afin qu'elles viennent en contact avec les palpeurs et qui les font glisser verticalement au moyen de glissières en acier et de roulements à billes linéaires, des conduits pneumatiques flexibles, munis de distributeurs transportant l'air comprimé depuis le sous-système pneumatique (7) jusqu'au vérins, étant présents.

7. Poste pour contrôler des essieux montés de véhicules ferroviaires selon l'une quelconque des revendications précédentes, caractérisé en ce que le sous-système électronique (8) comprend, en outre, une unité collectrice et de numérisation, une unité pour commander l'ordinateur (9) et communiquer avec ce dernier, plusieurs électrovannes alimentant et commandant les unités, des cartes de mesure analogiques, trois sources d'alimentation en énergie et une unité de commande de processus.
